# EUROPEAN PATENT APPLICATION

(11) **EP 2 695 683 A1**
(43) Date of publication of application: **12.02.2014**
(21) Application number: 12382318.9
(22) Date of filing: 06.08.2012
(51) Int. Cl.: B08B 1/00, B08B 3/02, F24J 2/46

(54) **Device for the maintenance of flat elements, in particular solar panels**

(71) Applicant: Chemik Innovacion y Desarrollos S.L., 20305 Irun (ES)
(72) Inventor: Chinchurreta Diaz, Juan Cruz, 20280 HONDARRIBIA (ES)
(74) Representative: Igartua, Ismael

(57) **Abstract**

Device that comprises a maintenance module (5) suitable for performing the maintenance of the surface (2a) of a flat element (2), in particular of a solar panel. The maintenance module (5) is movable in relation to the flat element (2). The device (1) also comprises means suitable for guiding and moving said maintenance module (5) in relation to the flat element (2). Said means suitable for guiding and moving the maintenance module (5) comprise two guide modules (6, 6') facing each other, which embrace the side edges (3, 4) of the flat element (2).

## Description

### TECHNICAL FIELD

This invention relates to devices suitable for performing different maintenance tasks on flat elements, in particular solar panels.

### PRIOR ART

There are known guided devices for cleaning the flat surfaces of solar panels. These devices usually comprise an additional guide on which said device moves. This additional guide must be minimally the same length as the flat surface to be cleaned to ensure that the required surface is cleaned in its entirety, which makes the handling of said devices very difficult.

However, there are also known devices that do not comprise said additional guide, and in this respect EP2437001 A1 also discloses a device for the cleaning and maintenance of solar panels. The device of EP2437001 A1 comprises a maintenance module suitable for performing the maintenance of the upper face of the solar panel, a guide unit for guiding the maintenance module in relation to the surface of the solar panel and a drive unit to move said maintenance module. Both the guide unit and the drive unit are placed on the surface to be cleaned of the solar panel. The guide unit comprises rollers that rotate freely and are supported on the upper edge of the solar panel.

### BRIEF DISCLOSURE OF THE INVENTION

It is the object of the invention to provide a device for performing different maintenance tasks on flat elements, in particular solar panels, as described in the claims.

The device of the invention is suitable for performing maintenance tasks on flat elements, such as solar panels. The device comprises a maintenance module suitable for performing the maintenance of the surface of the flat element, said maintenance module being movable in relation to the flat element. The device also comprises means suitable for guiding and moving said maintenance module in relation to the flat element. Said means suitable for guiding and moving the maintenance module comprise two guide modules facing each other, which embrace the side edges of the flat element.

Thanks to the device of the invention, said device is guided in relation to the side edges of the flat element in a safe and reliable manner and without damaging the surface of the flat element, the device being capable of being moved both on flat elements disposed horizontally and on flat elements disposed inclined.

These and other advantages and characteristics of the invention will be made evident in the light of the drawings and the detailed description thereof.

### DESCRIPTION OF THE DRAWINGS

FIG. 1 shows a perspective view of a first embodiment of the device according to the invention.
FIG. 2A shows a front view of a guide module of the device of FIG. 1.
FIG. 2B shows a perspective view of the guide module of FIG. 2A but without the protection cover.
FIG. 3A shows elevated front view of the other guide module of the device of FIG. 1.
FIG. 3B shows a perspective view of the guide module of FIG. 3A but without the protection cover.
FIG. 4 shows a perspective view of a second embodiment of the invention.
FIG. 5 shows an exploded view of the second embodiment of FIG. 4.
FIG. 6 shows a perspective view of a solar plant with two devices according to the embodiment of FIG. 4.

### DETAILED DISCLOSURE OF THE INVENTION

The device 1 of a first embodiment of the invention is suitable for performing maintenance tasks on flat elements, such as solar panels. The flat element 2 comprises a surface 2a, a lower surface and a perimeter edge. Said edge comprises two side edges 3 and 4, a front edge and a rear edge. In the specific case of a solar panel, it usually comprises a perimeter frame that surrounds the surface of the solar panel. In this case, said perimeter frame corresponds with the perimeter edge of the flat element 2. The edges of the element 2 also comprise an upper face, a lower face and a front face.

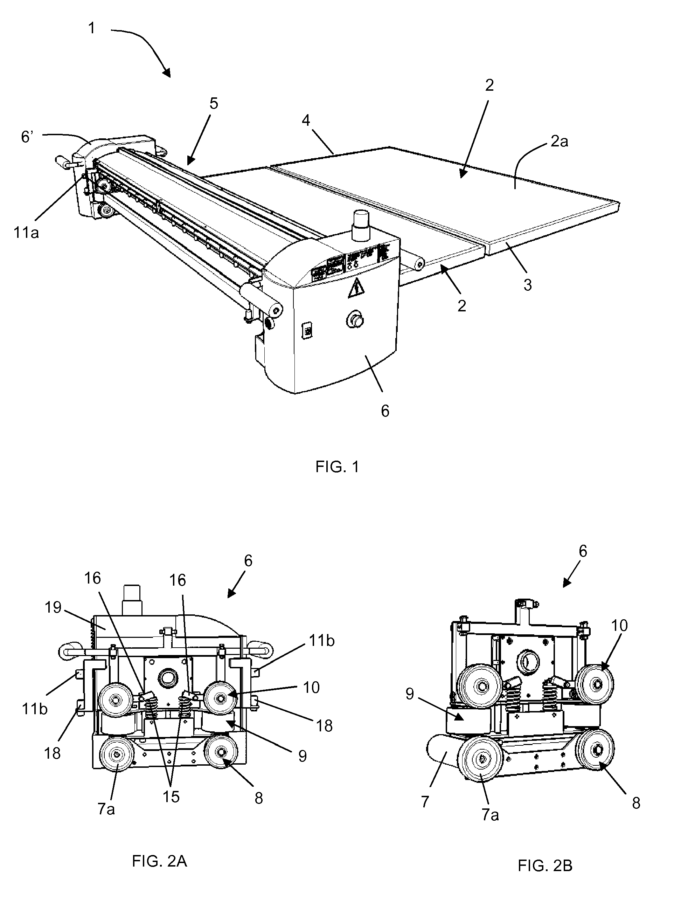

The device 1, as shown in Figure 1, comprises a maintenance module 5 suitable for performing the maintenance of the surface 2a of the flat element 2, said maintenance module 5 being movable in relation to the flat element 2. The device 1 also comprises means suitable for guiding and moving said maintenance module 5 in relation to the flat element 2. Said means suitable for guiding and moving the maintenance module 5 comprise two guide modules 6 and 6' facing each other, which embrace the side edges 3 and 4 of the flat element 2.

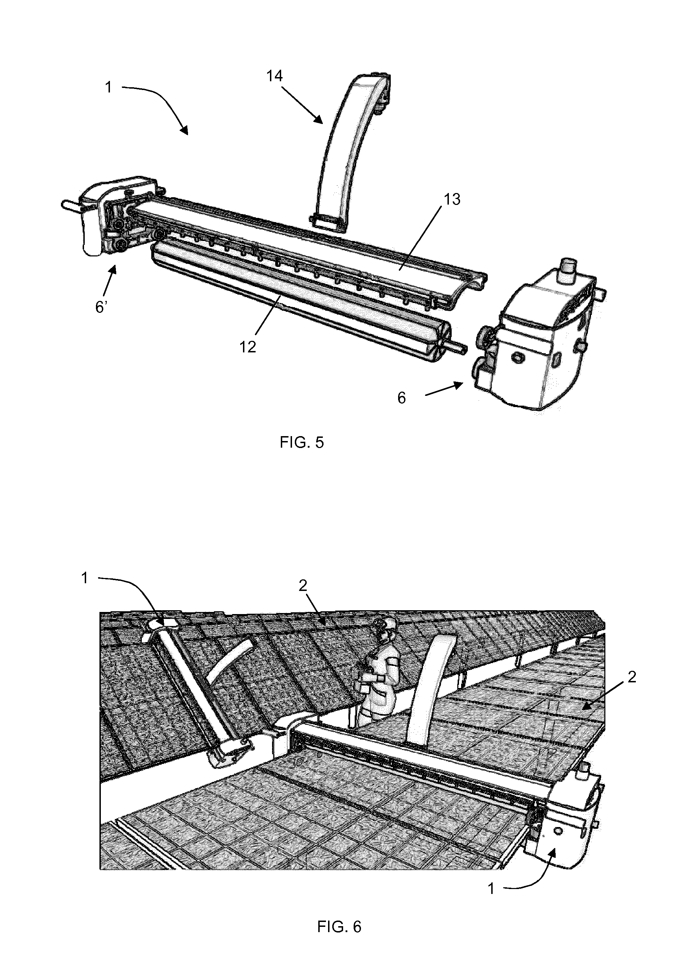

Thanks to the device 1 of the invention, said device 1 is guided in relation to the side edges 3 and 4 of the flat element 2 in a safe and reliable manner and without damaging the surface 2a of the flat element 2, the device 1 being capable of moving both on flat elements 2 disposed horizontally and on flat elements 2 disposed inclined, as shown in Figure 6. Nor is a pre-installation of guides required, an operation that hampers and slows down the maintenance tasks of the flat element 2.

In the specific case that the flat element 2 corresponds with a photovoltaic panel, it comprises an active surface 2a that is comprised of a plurality of photovoltaic cells and which is surrounded by a perimeter frame, as commented above. In this case, the device 1 is guided and moved in relation to said perimeter frame, which in turn corresponds with the side edges of the panel, therefore, the means suitable for guiding and moving the maintenance module 5 are disposed outside said active surface 2a, avoiding the risk of damaging said photovoltaic cells.

Each guide module 6 and 6' comprises upper guide means 10 and 10' suitable for making contact on the upper face of the corresponding side edge 3 or 4 of the flat element 2, and lower guide means 8 and 8' suitable for making contact on the lower face of the corresponding side edge 3 or 4 of the flat element 2. Said guide modules 6 and 6' also comprise a protection cover 19 and 19'.

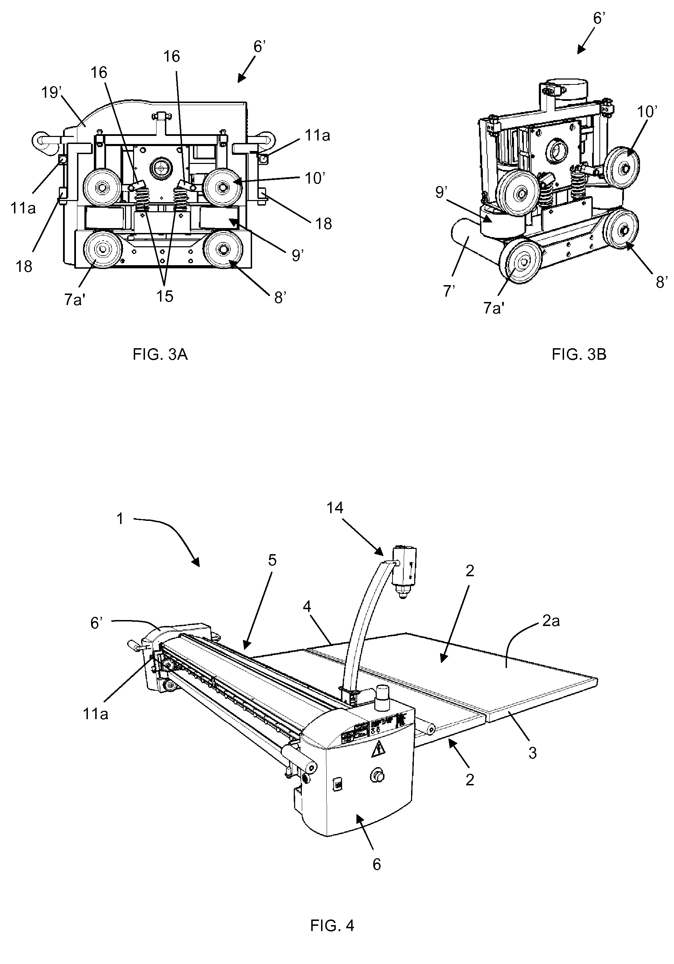

The upper guide means 10 and 10' of each guide module 6 and 6' are tilting, comprising elastic means 15, as shown in Figures 2A, 2B, 3A and 3B, in order to absorb the possible irregularities of the element 2 and thereby ensure the contact of said upper guide means 10 and 10' on the upper face of the corresponding side edge 3 or 4 of the element 2. The upper guide means 10 and 10' of each guide module 6 and 6' also comprise two guide wheels that are fitted with freedom of rotation. As a result, said guide wheels may rotate freely on the upper face of the corresponding side edge 3 or 4. As commented above, to ensure that said guide wheels make contact with the upper face of the corresponding side edge 3 or 4, as shown in the examples of Figures 2A, 2B, 3A and 3B, each guide wheel is connected to a tilting cam 16 that is also coupled to a damper that comprises said elastic means 15. In place of the elastic means 15 or the tilting cam 16 any other means may be used provided that the contact of the upper guide means 10 and 10' on the upper face of the corresponding side edge 3 or 4 is ensured. For example, hydraulic or pneumatic means may be used.

In this first embodiment the lower guide means 8 and 8' of at least one of the guide modules 6 and 6' comprise a drive module 7 or 7' that is suitable for moving the device 1. The device 1 is moved according to an advance direction that is longitudinal in relation to the flat element 2. The device 1 is reversible, with the result that the device 1 may be moved according to a first direction or according to a second direction opposite to said first direction. In the non-restrictive example of Figures 2A, 2B, 3A and 3B, the lower guide means 8 and 8' of each guide module 6 and 6' comprise a drive module 7 or 7'.

In the example of Figures 2A, 2B, 3A and 3B, the lower guide means 8 and 8' of each guide module 6 and 6' comprise a guide wheel fitted with freedom of rotation and a drive wheel 7a or 7a' fitted in such a way that it rotates drove by a drive force propelled by the corresponding drive module 7 or 7'. Said drive wheels 7a and 7a' are disposed in a manner that they are not aligned with each other. It is also possible that only one of the guide modules 6 or 6' comprises the drive wheel 7a or 7a', in this case the lower guide means 8 or 8' of the other guide module 6 comprising two guide wheels.

The two guide modules 6 and 6' are disposed in such a way that they face each other and each guide module 6 and 6' embraces one of the side edges 3 or 4, so that each side edge 3 or 4 is disposed between the upper guide means 10 and 10' and the lower guide means 8 and 8' in the manner of a sandwich. As a result, each guide module 6 and 6' is guided in relation to the upper face and to the lower face of the corresponding side edge 3 or 4.

In addition, in order to prevent the device 1 from sliding in an undesired manner on the flat area of the surface 2a of the flat element 2, each guide module 6 and 6' also comprises in this embodiment lateral guide means 9 and 9' that are suitable for making contact on the front face of the corresponding side edge 3 or 4 of the flat element 2 and which prevent the device 1 from sliding laterally. Said lateral guide means 9 and 9' also comprise two guide wheels that are fitted with freedom of rotation, with the result that said guide wheels may rotate freely on the front face of the corresponding side edge 3 or 4. Thus, this guarantees that the device 1 may move on the surface 2a of the element 2 without the risk of it sliding involuntarily whatever the position or the inclination of the flat element 2, in other words inclined at 0°, at 45°, at 90° or by even more.

The device 1 according to the first embodiment of the invention also comprises alignment means suitable for keeping the maintenance module 5 substantially aligned in relation to the direction of advance of the device 1, said alignment means comprising at least one emitter 11a and at least one receiver 11b, preferably of light or a laser. In this first embodiment, the guide module 6' comprises two emitters 11a, each one disposed on one end of the guide module 6', and the other guide module 6 comprises two receivers 11b also disposed on each end of the guide module 6. As the skilled person already knows, each pair of emitter 11a and receiver 11b must be aligned, so that the signal emitted by the emitter 11a must be received by the receiver 11b. If the signal of one of the emitters 11a is not received by the corresponding receiver 11b, the device 1 is capable of aligning itself in order to correct the trajectory (accelerating or braking one of the guide modules 6 or 6') until the signals emitted by the emitters 11a are received by the corresponding receivers 11b. This characteristic is especially advantageous in preventing the device 1 from becoming jammed and being unable to advance.

The guide modules 6 and 6' of the device 1 are connected by the maintenance module 5.

The assembly of the components of the device 1 is very simple, it being especially advantageous to transport, in long journeys for example, the device 1 unassembled in order to save space in the transport vehicle. When the device 1 has been assembled, in order to make it easier to handle, each guide module 6 and 6' comprises two handles, each one disposed on one end (as shown in Figures 1, 4, 5 and 6), with the result that the device 1 may easily be transported by two people, as if it were a stretcher. Alternatively, each guide module 6 and 6' may comprise wheels to make the device 1 even easier to handle. The user may push the device 1 to move it on the floor and thereby transport it to its destination or place of use.

The maintenance module 5 of the device 1 according to the first embodiment comprises a cleaning module that comprises at least one brush 12 suitable for rotating on the surface 2a of the flat element 2, at least one tank 13 suitable for containing water or any other fluid suitable for cleaning, at least one polishing unit suitable for waxing and/or polishing the surface 2a, at least one rubber wiper, at least one suction unit suitable for removing excess water and/or residual cleaning agents, pushing means suitable for removing snow, or a combination of them. The device 1, in the first embodiment of the invention, preferably comprises a brush 12 and a tank 13 as shown in the example of Figure 5. The brush 12 rotates in the advance direction of the device 1 and the tank 13 is preferably disposed above the brush 12. The cleaning module also comprises a plurality of nozzles 17 to distribute the water or fluid contained in the tank 13. Said nozzles 17 are disposed ahead the brush 12 according to the advance direction of the device 1. As a result, the water or the fluid of the tank 13 falls directly on the surface 2a, softening the possible dirt on the surface 2a and enabling the brush 12 to drag said dirt easily as it advances, thereby increasing the cleaning efficiency of the surface 2a of the flat element 2. As the device 1 is reversible, the cleaning module also comprises another plurality of nozzles 17, disposed behind the brush 12, with the result that whatever the direction of advance, the water or liquid of the tank 13 may fall directly on the surface 2a ahead the brush 12. The cleaning module also comprises a cover, not shown in the figures, preferably arched in shape, disposed above the brush 12 and adapted to the contour of said brush 12 in order to retain and/or redirect at least one portion of water projected by the brush 12.

The device 1 according to a second embodiment of the invention comprises all the characteristics of the device 1 of the first embodiment, but the maintenance module 5, as well as comprising the cleaning module, also comprises a diagnosis module 14 suitable for detecting defective cells in a photovoltaic panel. This last characteristic is especially advantageous in the specific case that the flat element 2 corresponds with a photovoltaic panel where the surface 2a of said photovoltaic panel is composed of a plurality of photovoltaic cells. As the skilled person well knows, the temperature of said cells is an important factor in determining the correct operation of the photovoltaic panel. In addition, a defective cell may result in damage to the neighbouring cells, making the problem worse over time, which makes it especially important to detect defective cells as soon as possible. As the skilled person knows, a defective cell irradiates a temperature above the operating temperature. The diagnosis module 14 of the device 1 thus comprises a thermographic unit, preferably a thermographic camera or a plurality of thermographic sensors. As the device 1 advances, the diagnosis module 14 is suitable for longitudinally scanning the surface 2a of the flat element 2, in this case of the photovoltaic panel. According to the example of Figures 4 and 5 the thermographic unit of the diagnosis module 14 comprises a thermographic camera that is movable in a transverse direction with the result that it is also suitable for transversally scanning the surface 2a of the flat element 2, substantially covering the entire surface 2a of the element 2. The diagnosis module 14 may be movable in relation to the maintenance module 3 through well-known systems, such as a rack-and pinion system etc. In another example, not shown in the figures, the thermographic unit of the diagnosis module 14 comprises a plurality of thermographic sensors instead of the thermographic camera. Said thermographic sensors are disposed along the maintenance module 5, with the result that they are also suitable for transversally scanning the surface 2a of the flat element 2, also substantially covering the entire surface 2a. In this case, it is not necessary that the diagnosis module 14 is movable.

The device 1 according to any of the embodiments described may be adapted to transmit data by means of radio technology, GSM, WIFI or any other wireless technology. As a result, the diagnosis module 14 of the second embodiment may generate a thermographic map with a GPS reference indicating the exact location of the hot points or defective cells detected in the photovoltaic panel or even in a plurality of photovoltaic panels, as may be the case in a solar plant. As a result, the detection and the replacement or repair of said defective cells is made far easier, thereby increasing the efficiency and the durability of the photovoltaic panels. In addition, the data collated by the diagnosis module 14 may also be stored so that statistical control of the situation of the panels may be carried out and future anomalies thus may be anticipated. In this respect, it may also be possible to get a maintenance plan designed to keep a solar plant comprising a plurality of photovoltaic panels in optimal operating condition.

In another embodiment not shown in the drawings, the maintenance module 5 comprises the diagnosis module 14 as described in the device 1 of the second embodiment, but does not comprise the cleaning module.

The device 1, according to any of the embodiments described, may also include a series of alarms and safety measures to guarantee the correct operation of the device 1, and to prevent potential risks that may affect the safety of the user while the device 1 is operating.

In this respect, the device 1, according to any of the embodiments described, preferably comprises at least one detector 18, for example inductive, proximity etc, which detects the lack of guide rail, indicating that the device 1 has to stop because it has reached the end of the track. In the example of Figures 2A, 2B, 3A and 3B each guide module 6 and 6' comprises a detector 18 on each end of the guide module 6 and 6'.

The device 1, according to any of the embodiments described, may also communicate by means of radio technology, GSM, WIFI or Bluetooth with mobile phones, tablets, iPads, etc so that the user can keep track at all times of the state of one or more devices 1 that are operating, for example, at a solar plant. The user may also receive notifications and alarms (eg, a lack of water in the tank), with the result that the user does not have to be present while the device 1 or devices 1 is/are working, allowing the user to perform other tasks.

In addition, the device 1, also according to any of the embodiments described, is suitable for being remotely controlled or for being programmed so that it operates in an autonomous and self-sufficient way. To achieve this, the device 1 is supplied by means of batteries, although the option of it being supplied by solar panels or by a combination of both systems is not ruled out. To enable the device 1 to be programmed so that it operates in automatic mode, one of the guide modules 6 may comprise a programming panel.

The device 1, or a plurality of devices 1, according to any of the embodiments described, is suitable for being used in a solar plant that comprises a plurality of solar panels 2, as shown in Figure 6. Said device 1 is also suitable for controlling the state of a solar panel in the facilities of solar panel manufacturers.

The device 1, according to any of the embodiments described, preferably comprises materials based on stainless alloys in order to withstand inclement weather without the device 1 being damaged.

## Claims

1. Device for the maintenance of flat elements, in particular solar panels, which comprises a maintenance module (5) suitable for performing the maintenance of the surface (2a) of the flat element (2), said maintenance module (5) being movable in relation to the flat element (2), and means suitable for guiding and moving said maintenance module (5) in relation to the flat element (2), **characterised in that** said means suitable for guiding and moving the maintenance module (5) comprise two guide modules (6, 6') facing each other, which embraced the side edges (3, 4) of the flat element (2).

2. Device according to claim 1, wherein each guide module (6, 6') comprises lower guide means (8, 8') suitable for making contact on the lower face of the corresponding side edge (3, 4) of the flat element (2), and upper guide means (10, 10') suitable for making contact on the upper face of the corresponding side edge (3, 4) of the flat element (2).

3. Device according to claim 2, wherein the upper guide means (10, 10') of each guide module (6, 6') are tilting.

4. Device according to claim 3, wherein the upper guide means (10, 10') of each guide module (6, 6') comprise elastic means (15) suitable for ensuring the contact of said upper guide means (10, 10') on the upper face of the corresponding side edge (3, 4) of the flat element (2).

5. Device according to any of claims 2 to 4, wherein the upper guide means (10, 10') of each guide module (6, 6') comprise two guide wheels fitted with freedom of rotation.

6. Device according to any of the preceding claims, wherein the lower guide means (8, 8') of at least one guide module (6,6') comprise a drive module (7, 7') suitable for moving the device (1).

7. Device according to claim 6, wherein the lower guide means (8, 8') of each guide module (6, 6') comprise a guide wheel fitted with freedom of rotation and a drive wheel (7a, 7a') fitted in such a way that it rotates by a drive force propelled by the drive module (7,7').

8. Device according to any of the preceding claims, wherein each guide module (6, 6') comprises lateral guide means (9, 9') suitable for making contact on the front face of the corresponding side edge (3, 4) of the flat element (2).

9. Device according to claim 8, wherein the lateral guide means (9, 9') of each guide module (6, 6') comprise two guide wheels fitted with freedom of rotation.

10. Device according to any of the preceding claims, wherein the device (1) also comprises alignment means suitable for keeping the maintenance module (5) substantially aligned in relation to the direction of advance of the device (1), said alignment means comprising at least one emitter (11a) and at least one receiver (11b), preferably of light or laser.

11. Device according to any of the preceding claims, wherein the maintenance module (5) comprises a cleaning module that comprises at least one brush (12) suitable for rotating on the surface (2a) and at least one tank (13) suitable for containing water or any other fluid suitable for cleaning, the tank (13) being disposed preferably on the brush (12).

12. Device according to any of claims 1 to 10, wherein the maintenance module (5) comprises a cleaning module that comprises at least one brush (12) suitable for rotating on the surface (2a) of the flat element (2), at least one tank (13) suitable for containing water or any other fluid suitable for cleaning, at least one polishing unit suitable for waxing and/or polishing the surface (2a), at least one rubber wiper, at least one suction unit suitable for removing excess water and/or residual cleaning agents, pushing means suitable for removing snow or a combination of them.

13. Device according to any of the preceding claims, comprising a diagnosis module (14) suitable for detecting defective cells in a photovoltaic panel, the surface (2a) of the flat element (2) corresponding with the surface of said photovoltaic panel.

14. Device according to claim 13, wherein said diagnosis module (14) comprises a thermographic unit, preferably a thermographic camera or a plurality of thermographic sensors.

15. Device according to claims 13 or 14, wherein the photovoltaic panel (2) comprises an active surface (2a) that comprises a plurality of photovoltaic cells, the means suitable for guiding and moving the maintenance module (5) being disposed outside said active surface (2a).
